# EUROPEAN PATENT SPECIFICATION

(11) **EP 2 075 400 B1**
(45) Date of publication and mention of the grant of the patent: **08.08.2012**
(21) Application number: 07425851.8
(22) Date of filing: 31.12.2007
(51) Int. Cl.: E05G 5/00, G06K 9/00, G08B 13/196

(54) **Video monitoring system**
Videoüberwachungssystem
Système de surveillance vidéo

(43) Date of publication of application: 01.07.2009
(73) Proprietor: March Networks S.p.A., 20033 Desio (MI) (IT)
(72) Inventor: Colciago, Fabrizio, 20048 Carate Brianza (Milano) (IT)
(74) Representative: Petruzziello, Aldo

(56) References cited:
- US-A- 5 694 867
- US-A1- 2005 238 213

## Description

The present invention refers to a video surveillance system, for monitoring access to video monitored premises, particularly banks and the like.

As is known, banks are generally provided with video monitoring systems, which include one, or more video cameras adapted to film the people who enter the room to be monitored. The object of these video monitoring systems is to discourage possible robbers who could be recognised from the images captured by the video cameras.

However, robbers are well aware of the presence of the video monitoring systems and tend not to face towards the video cameras so as not to be recognised.

In order to solve this problem at least in part, some banks, in combination with the known video monitoring systems, also use biometric data checking systems (such as, for example, fingerprint checking systems), which allow clients to access the bank's premises. In this manner, once the biometric system has taken the client's fingerprints, the video cameras capture his face and the door for access to the bank's premises is opened. Consequently, if the robber's face is not captured, he can be identified by his fingerprints.

However, such a type of system with recording of biometric data does not comply with current regulations on privacy, since it records the clients' personal data.

US 2005/0238213 discloses a system and a method of securing an entryway including maintaining at least one movable door in a closed position based on at least one of: detection of more than one person in the cabin at a time; detection of contraband present in the cabin; or detection of a person in the cabin wearing a mask or disguise.

US 5,694,867 discloses a fail-safe control chamber security system including a bullet-proof access control unit having an entrance chamber and an exit chamber, each provided with a respective pair of interlocking doors and with floor mats located between the interlocking doors to determine the location of a person within the chamber. The system further includes arrangements for preventing the simultaneously opening of the pair of interlocking doors of the entrance chamber and the exit chamber.

Object of the present invention is to overcome the drawbacks of the prior art by providing a video monitoring system, in particular for banks, which is efficient, effective, versatile, practical and simple to produce.

This object is achieved in accordance with the invention with the characteristics listed in appended independent claims 1 and 7.

Advantageous embodiments of the invention are apparent from the dependent claims.

The video monitoring system according to the invention comprises:
- at least one video camera disposed so as to frame an entrance area to a room to be video monitored,
- an automatic door controlled by an actuator to control the access to the room to be video monitored, and
- a control system connected to said video camera and to said actuator.

The control system comprises recognition means to recognise a face from the images captured by said video camera and accordingly to control said actuator for opening the door, so as to allow the access to the user whose face has been recognised.

The advantages of the video monitoring system according to the invention are obvious. In fact, the clients who must access the room are not asked to provide biometric data but simply to look towards the video cameras, which in any case are present inside the institute.

The system according to the invention allows the attitude of the individual in the entrance area to be evaluated. Anyone entering the bank with the intention of carrying out a robbery typically turns his or her gaze away from the video cameras or tries to hide his or her facial features. These behaviours lead the system not to identify the individual's face clearly enough and as a result not to open the door to prevent access by the suspect individual.

When a face is not identified, the system advantageously alerts the operators. However, the system according to the invention does not involve an excessive human intervention because it will be sufficient for the operators to order opening of the door if it is evident that the person in the entrance area is not suspicious-looking (but has perhaps not understood that the video camera has to film his or her face).

Further characteristics of the invention will be made clearer by the detailed description that follows, referring to a purely exemplifying and therefore non limiting embodiment thereof, illustrated in the appended drawings, wherein:
Figure 1 is a block diagram showing diagrammatically the video monitoring system according to the invention;
Figure 2 is a flow chart illustrating diagrammatically the operation of the video monitoring system according to the invention; and
Figure 3 is a block diagram illustrating diagrammatically the operation of an algorithm for identifying faces used in the present invention.

The video monitoring system according to the invention, designated as a whole with reference numeral 1, is described with the aid of the figures.

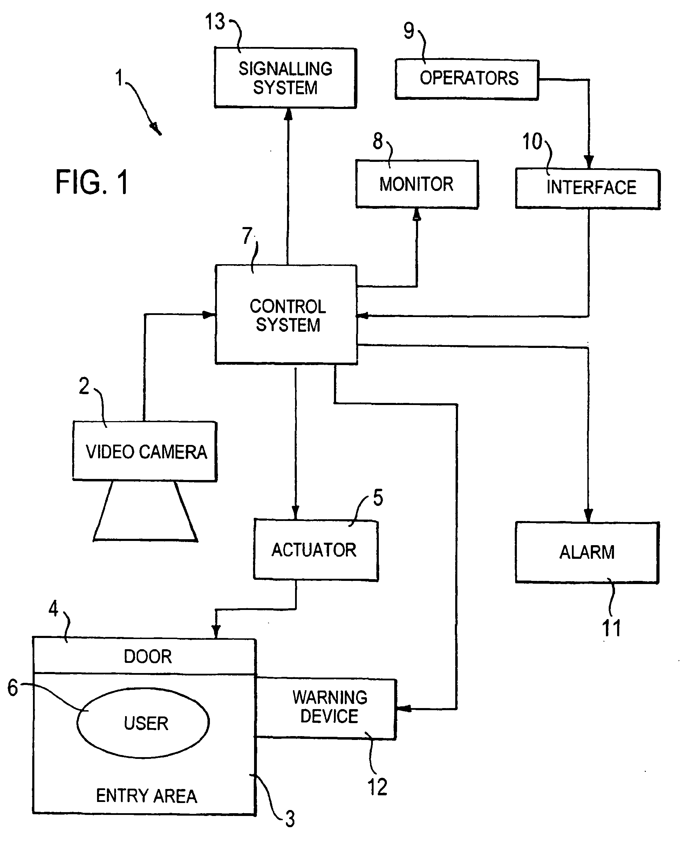

With reference for now to Figure 1, the video monitoring system 1 comprises a video camera 2 or a group of video cameras directed towards an entrance area 3 disposed in front of an automatic door 4 which controls the access to a room to be video monitored, such as for example a room of a bank.

As is known, the automatic door 4 is connected to an actuator 5 which opens/closes the door 4 according to special command signals sent to the actuator 5.

The video camera 2 is positioned so as to be able to film the face of a user 6 who stands in the entrance area 3, waiting for the automatic door 4 to open to allow him access.

According to the invention, the video camera 2 is connected to a control system 7. The control system 7 can advantageously be integrated into the video camera 2. However, the control system 7 can also be implemented through any processor outside the video camera 2.

The control system 7 comprises a processor wherein suitable software, which implements a face recognition algorithm, is installed, as will be described hereunder in greater detail.

The control system 7 is operatively connected to the actuator 5 to control the opening of the automatic door 4. Furthermore, the control system 7 is connected to a warning device 12, such as for example a display and/or a loudspeaker adapted to signal video/audio warning messages to the user 6 who is in the entrance area 3.

The control system 7 is operatively connected to a signalling device 13, to a video or monitor 8 and to an interface 10. The signalling device 13, the monitor 8 and the interface 10 can all be accessed by operators 9 who work inside the premises to be monitored or in a remote workstation.

Lastly, the control system 7 is operatively connected to an alarm 11 adapted to be detected by a guard or by other security personnel authorised to intervene in the video monitored premises.

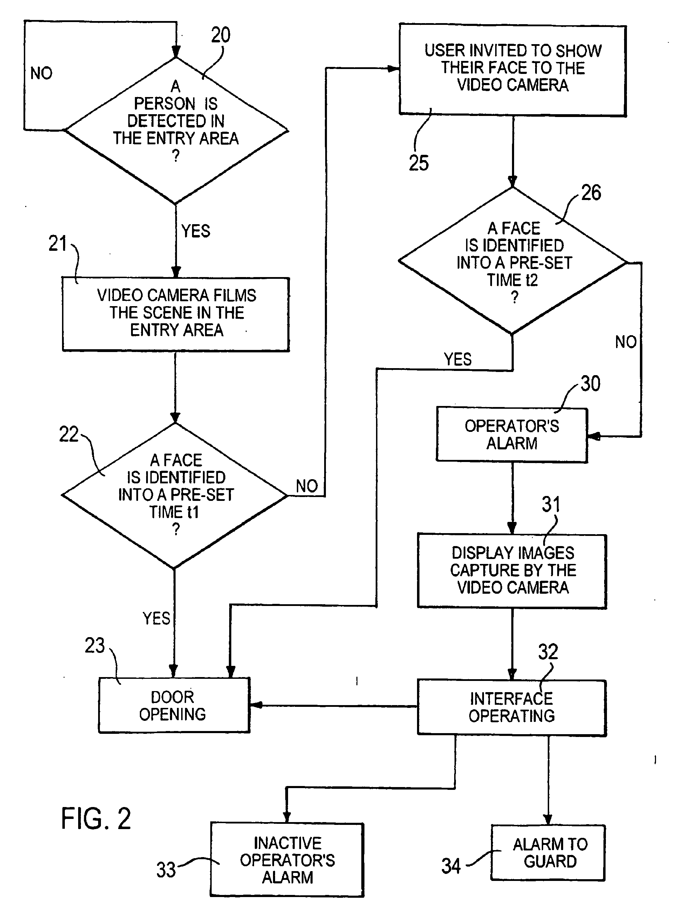

The operation of the video monitoring system 1 according to the invention is described with reference to Figure 2.

In the initial step 20, the presence of a person 6 who is in the entrance area 3 and wishes to enter the video monitored premises is detected. The presence of a person 6 can be detected by the video camera 2 itself or with presence detection sensors, per se known and therefore not illustrated. Obviously, when there is no-one in the entrance area 3 or when a person is leaving the entrance area 3, the video monitoring system is not activated.

Once the presence of a user 6 has been detected in the entrance area 3, the system proceeds to the step 21, in which the video camera 2 films the scene in the entrance area 3. The images captured by the video camera are sent to the control system 7.

In the step 22 the control system 7 establishes whether there is a face that can be identified clearly enough in the images captured by the video camera 2. If within a set time (t1) the control system 7 considers that in the images captured by the video camera there is a face that can be identified sufficiently clearly, the control system 7 sends a command signal to the actuator 5. In the next step 23, in accordance with the signal received from the control system 7, the actuator 5 opens the automatic door 4 to allow the user 6 to enter.

If, in the pre-set period of time (t1) the control system 7 fails to identify a recognisable face in the images captured by the video camera 2, the system proceeds to the step 25, in which it prevents the opening of the door 4 and invites the user 6 to show his or her face to the video camera, through video and/or audio messages transmitted by the warning device 12, repeated once or a number of times at regular intervals.

At this point, the system proceeds to the step 26 in which the control system 7 continues to attempt to identify a face from the images captured by the video camera 2. If within a pre-set interval of time (t2) a face is identified, the system proceeds with the door-opening procedure 23 by sending a command signal to the actuator 5 which controls the opening of the door 4.

If in the pre-set period of time (t2) the control system 7 fails to identify a recognisable face in the images captured by the video camera 2, the system proceeds to the step 30, in which the control system 7 sends a warning signal to the operators 9, triggering the signalling device 13 which alerts the operators by means of an alarm signal.

In the step 31 the control system 7 sends the images captured by the video camera 2 to the display 8 so that the operators 9 can see the scene in the entrance area 3 and possibly the person 6 who wants to access the video monitored premises, to be able to evaluate whether the person 6 has a suspicious demeanour.

Next, in the step 32 the operator will be able to operate the interface 10 to send commands to the control system 7. The interface 10 advantageously comprises three keys designated for specific functions.

If there is no-one in the entrance area 3, the operator 9 operates a first key of the interface 10 to start a procedure 33 to inactivate the operators' alarm state.

If there is someone in the entrance area 3 who is not considered a suspicious individual, the operator 9, besides inactivating the operators' alarm, operates a second key of the interface 10 to order to activate the door-opening procedure 23 and to allow the person to enter.

If, on the other hand, there is a person in the entrance area 3 who is considered a suspicious individual, the operator 9 operates a third key of the interface 10 to start a procedure 34 for signalling the alarm to a guard. In this procedure 34 the alarm 11 is triggered and the door 4 is not opened to prevent the suspicious individual from entering. Consequently a guard is alerted and can proceed with possible identification of the suspicious individual.

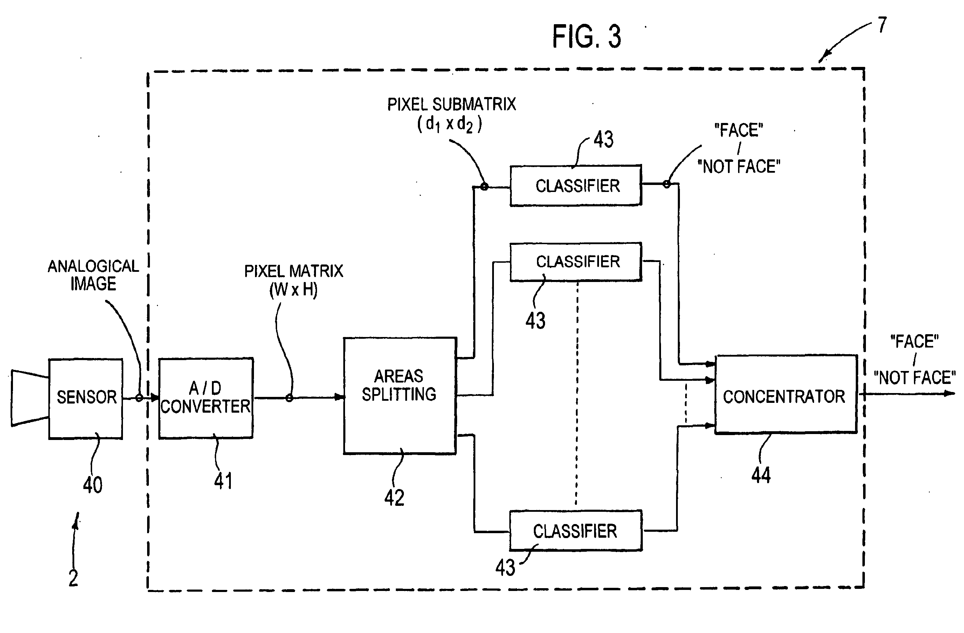

With particular reference to Figure 3, purely by way of a non-limiting example, a face recognition algorithm implemented in the control system 7 that, as stated previously, can be integrated into the video camera 2 is illustrated below.

The video camera 2 acquires the scene in the entrance area continuously, by means of a group of sensors 40 which generate frames in the form of analogical images. The individual frames captured by the video camera 2 are digitalised by means of an analogical-to-digital converter 41, so that each frame is represented by a (WxH) pixel matrix.

The (WxH) pixel matrix forming each frame is split into a plurality of rectangular areas, partially overlapping and of different sizes, by means of special splitting software 42. These areas are represented by (d₁ x d₂) pixel submatrixes.

A classifying software 43, which identifies the area as "FACE" or as "NOT FACE", is applied to each (d₁ x d₂) pixel submatrix.

The classifier 43 analyses each area of the image, verifying whether there are groups of pixels within them whose brightness and/or colour value could indicate the presence of a face. The region is classified as "FACE" only if the number of groups of pixels identified is sufficient.

The results of the classifiers 43 are sent to a concentrator 44, which decides that a face is present in the image if at least one of the classifiers has given a positive result.

For example the output of each classifier 43 is "1" if it identifies a face and "0" if it does not identify a face. In this case the concentrator 44 can be realised with an OR logic circuit whose output is "1" if at least one of its inputs is "1".

The classification software 43 is realised starting from a digital images database containing examples of faces and examples of not-faces. The individual images can therefore contain the face of different persons photographed from the front, or photographs of natural scenes that do not contain people.

The position of the faces inside the individual images must be catalogued manually and entered into the database. The database is used during the software design steps to identify automatically similar areas of pixels, which are repeated in the same positions and only in images containing faces. During this step the examples provided by the database are examined to identify the groups of pixels whose brightness and/or colour value is distinctly different for the "face" set and for the "not-face" set. The position of these groups of pixels inside the sample images will be used later by the algorithm to classify the content of the frames extracted by the video camera 2 on the scene.

Numerous changes and modifications of detail within the reach of a person skilled in the art can be made to the present embodiment of the invention without thereby departing from the scope of the invention as set forth by the appended claims.

## Claims

1. A video monitoring system (1) comprising:
- at least one video camera (2) disposed so as to capture an entrance area (3) of premises to be video monitored,
- an automatic door (4) controlled by an actuator (5) to regulate the access to the premises to be video monitored, and
- a control system (7) connected to said video camera (2) and to said actuator (5) and comprising recognition means to recognise a face from the images captured by said video camera (2) and accordingly to control said actuator (5) for opening the door (4) **characterised in that**
- said recognition means (42, 43, 44) includes: a splitter block (42) to split into a plurality of rectangular areas the images captured by the video camera (2); at least a classifier block (43) to identify said areas split by the splitter block (42) as "FACE" and "NOTFACE" based on an image database containing examples of faces and not faces and a concentrator block (44) to decide if a face is present in the images captured by the video camera (2) based on results provided by the at least one classifier block (43).

2. A system (1) according to claim 1, **characterised in that** it further comprises a warning device (12) connected to said control system (7) to warn a user (6) who is in the entrance area (3) to turn his or her face towards the video camera (2), when the recognition means (42, 43, 44) of the control system (7) do not recognise the user's face after a pre-set period of time (t1).

3. A system (1) according to claim 1 or 2, **characterised in that** it further comprises a signalling device (13) connnected to said control system (7) to signal an alarm to operators (9) when the recognition means (42, 43, 44) of the control system (7) do not recognise a face after a pre-set period of time (t2).

4. A system (1) according to claim 3, **characterised in that** it further comprises a display or monitor (13) connected to said control system (7) and accessible to said operators (9) to display the scene in the entrance area (3) after said signalling device (13) has signalled the alarm to said operators (9).

5. A system (1) according to claim 3 or 4, **characterised in that** it further comprises an interface (10) connected to said control system (7) and accessible to said operators (9) to disable said signalling device (13) and/or to control said actuator (5) to open the door (4).

6. A system (1) according to claim 5, **characterised in that** it further comprises an alarm device (11) connected to said control system (7) that can be operated by the operators (9) by means of said interface (10) to signal an alarm to a guard who can intervene for the recognition of the person (6) in the entrance area (3).

7. A video monitoring method to control the access to a video monitored room, the method comprising the following steps:
- capturing by means of a video camera (2) of the scene in an entrance area (3) in which there is an automatic door (4) for the access to video monitored premises, when a user (6) is in said entrance area (3), and
- recognizing a face from the images captured by said video camera (2),
the method being **characterized in that** the recognizing step comprises the following sub-steps:
- splitting the images captured by the video camera (2) into a plurality of rectangular areas;
- classifying said areas as "FACE" and "NOTFACE" based on an image database containing examples of faces and not-faces; and
- opening of said door (4) if a face is present in the images.

8. A method according to claim 7, **characterised in that** it further comprises the step of warning the user (6) to turn his or her face towards the video camera (2), when his or her face is not recognised after a pre-set period of time (t1).

9. A method according to claim 7 or 8, **characterised in that** it further comprises the step of signalling an alarm to operators (9) when the face of the user who is in the entrance area (3) is not recognised after a pre-set period of time (t2).

10. A method according to claim 9, **characterised in that**, after the signalling of the alarm to said operators (9), the scene in the entrance area (3) is displayed.

11. A method according to claim 10, **characterised in that** said operators (9) disarm the alarm state and/or order the opening of said door (4) if the viewing of the scene in the entrance area does not reveal risk situations.

12. A method according to claim 10, **characterised in that** said operators (9) send an alarm to a guard if the viewing of the scene in the entrance area reveals risk situations.

## Patentansprüche

1. Videoüberwachungssystem (1), das Folgendes umfasst:
- mindestens eine Videokamera (2), die so angeordnet ist, dass sie einen Eingangsbereich (3) zu videoüberwachten Räumlichkeiten aufnimmt,
- eine Automatiktür (4), die durch einen Aktuator (5) gesteuert wird, zum Regulieren des Zugangs zu den videoüberwachten Räumlichkeiten, und
- ein Steuerungssystem (7), das mit der Videokamera (2) und dem Aktuator (5) verbunden ist und ein Erkennungsmittel zum Erkennen eines Gesichts anhand der durch die Videokamera (2) aufgenommenen Bilder und zum entsprechenden Steuern des Aktuators (5) zum Öffnen der Tür (4) umfasst, **dadurch gekennzeichnet, dass**
- das Erkennungsmittel (42, 43, 44) Folgendes enthält: einen Teilerblock (42) zum Aufteilen der durch die Videokamera (2) aufgenommenen Bilder in mehrere rechteckige Bereiche; mindestens einen Klassifiziererblock (43) zum Identifizieren der durch den Teilerblock (42) aufgeteilten Bereiche als "GESICHT" und "KEINGESICHT", und einen Konzentratorblock (44) zum Entscheiden, ob ein Gesicht auf den von der Videokamera (2) aufgenommenen Bildern vorhanden ist, auf der Grundlage von durch den mindestens einen Klassifiziererblock (43) ausgegebenen Ergebnissen.

2. System (1) nach Anspruch 1, **dadurch gekennzeichnet, dass** es des Weiteren ein Aufforderungsgerät (12) umfasst, das mit dem Steuerungssystem (7) verbunden ist, um einen Nutzer (6), der sich in dem Eingangsbereich (3) befindet, aufzufordern, sein Gesicht zur Videokamera (2) zu drehen, wenn das Erkennungsmittel (42, 43, 44) des Steuerungssystems (7) das Gesicht des Nutzers nicht nach einem voreingestellten Zeitraum (t1) erkennt.

3. System (1) nach Anspruch 1 oder 2, **dadurch gekennzeichnet, dass** es des Weiteren ein Signalisierungsgerät (13) umfasst, das mit dem Steuerungssystem (7) verbunden ist, um den Bedienern (9) einen Alarm zu signalisieren, wenn das Erkennungsmittel (42, 43, 44) des Steuerungssystems (7) nach einem voreingestellten Zeitraum (t2) kein Gesicht erkennt.

4. System (1) nach Anspruch 3, **dadurch gekennzeichnet, dass** es des Weiteren ein Display oder einen Monitor (13) umfasst, das bzw. der mit dem Steuerungssystem (7) verbunden ist und den Bedienern (9) zugänglich ist, um die Szene in dem Eingangsbereich (3) anzuzeigen, nachdem das Signalisierungsgerät (13) den Alarm an die Bedienern (9) signalisiert hat.

5. System (1) nach Anspruch 3 oder 4, **dadurch gekennzeichnet, dass** es des Weiteren eine Schnittstelle (10) umfasst, die mit dem Steuerungssystem (7) verbunden ist und den Bedienern (9) zugänglich ist, um das Signalisierungsgerät (13) zu deaktivieren und/oder den Aktuator (5) so anzusteuern, dass er die Tür (4) öffnet.

6. System (1) nach Anspruch 5, **dadurch gekennzeichnet, dass** es des Weiteren eine Alarmvorrichtung (11) umfasst, die mit dem Steuerungssystem (7) verbunden ist und durch die Bediener (9) über die Schnittstelle (10) ausgelöst werden kann, um einem Wachmann einen Alarm zu signalisieren, damit der Wachmann eingreifen und für eine Erkennung der Person (6) in dem Eingangsbereich (3) sorgen kann.

7. Videoüberwachungsverfahren zum Steuern des Zugangs zu einem videoüberwachten Raum, wobei das Verfahren die folgenden Schritte umfasst:
- Aufnehmen, mit Hilfe einer Videokamera (2), der Szene in einem Eingangsbereich (3), in dem sich eine Automatiktür (4) für den Zugang zu videoüberwachten Räumlichkeiten befindet, wenn sich ein Nutzer (6) in dem Eingangsbereich (3) befindet, und
- Erkennen eines Gesichts auf von der Videokamera (2) aufgenommenen Bildern, wobei das Verfahren **dadurch gekennzeichnet ist, dass** der Schritt des Erkennens die folgenden Teilschritte umfasst:
- Aufteilen der von der Videokamera (2) aufgenommenen Bilder in mehrere rechteckige Bereiche;
- Klassifizieren der Bereiche als "GESICHT" und "KEINGESICHT" auf der Grundlage einer Bilddatenbank, die Beispiele von "Gesichtern" und "Keine Gesichter" enthält; und
- Öffnen der Tür (4), wenn ein Gesicht auf den Bildern vorhanden ist.

8. Verfahren nach Anspruch 7, **dadurch gekennzeichnet, dass** es des Weiteren den Schritt umfasst, den Nutzer (6) aufzufordern, sein Gesicht zu der Videokamera (2) zu drehen, wenn sein Gesicht nicht nach einem voreingestellten Zeitraum (t1) erkannt wurde.

9. Verfahren nach Anspruch 7 oder 8, **dadurch gekennzeichnet, dass** es des Weiteren den Schritt umfasst, den Bedienern (9) einen Alarm zu signalisieren, wenn das Gesicht des Nutzers, der sich in dem Eingangsbereich (3) befindet, nicht nach einem voreingestellten Zeitraum (t2) erkannt wurde.

10. Verfahren nach Anspruch 9, **dadurch gekennzeichnet, dass**, nach dem Signalisieren des Alarms an die Bediener (9), die Szene in dem Eingangsbereich (3) angezeigt wird.

11. Verfahren nach Anspruch 10, **dadurch gekennzeichnet, dass** die Bediener (9) den Alarmzustand entschärfen und/oder das Öffnen der Tür (4) anweisen, wenn die Betrachtung der Szene in dem Eingangsbereich keine Risikosituationen erkennen lässt.

12. Verfahren nach Anspruch 10, **dadurch gekennzeichnet, dass** die Bedienern (9) einen Alarm an einen Wachmann senden, wenn die Betrachtung der Szene in dem Eingangsbereich Risikosituationen erkennen lässt.

## Revendications

1. Système de vidéosurveillance (1) comprenant :
- au moins une caméra vidéo (2) disposée afin de capturer une zone d'entrée (3) de locaux soumis à la vidéosurveillance,
- une porte automatique (4) commandée par un actionneur (5) pour réguler l'accès aux locaux soumis à la vidéosurveillance, et
- un système de commande (7) connecté à ladite caméra vidéo (2) et au dit actionneur (5) et comprenant un moyen de reconnaissance pour reconnaître un visage parmi les images capturées par ladite caméra vidéo (2) et en conséquence commander au dit actionneur (5) d'ouvrir la porte (4), **caractérisé en ce que**
- ledit moyen de reconnaissance (42, 43, 44) comprend : un bloc de répartition (42) pour répartir dans une pluralité de zones rectangulaires les images capturées par la caméra vidéo (2) ; au moins un bloc de classification (43) pour identifier lesdites zones réparties par le bloc de répartition (42) en tant que « VISAGE » et « NON-VISAGE » sur la base d'une base de données d'images contenant des exemples de visages et de non-visages ; et un bloc de concentration (44) pour décider si un visage est présent dans les images capturées par la caméra vidéo (2) sur la base des résultats fournis par l'au moins un bloc de classification (43).

2. Système (1) selon la revendication 1, **caractérisé en ce qu'**il comprend en outre un dispositif d'avertissement (12) connecté au dit système de commande (7) pour avertir un utilisateur (6) se trouvant dans la zone d'entrée (3) de tourner son visage vers la caméra vidéo (2), lorsque le moyen de reconnaissance (42, 43, 44) du système de commande (7) ne reconnaît pas le visage de l'utilisateur après une période de temps prédéfinie (t1).

3. Système (1) selon la revendication 1 ou 2, **caractérisé en ce qu'**il comprend en outre un dispositif de signalisation (13) connecté au dit système de commande (7) pour signaler une alarme aux opérateurs (9) lorsque le moyen de reconnaissance (42, 43, 44) du système de commande (7) ne reconnaît pas un visage après une période de temps prédéfinie (t2).

4. Système (1) selon la revendication 3, **caractérisé en ce qu'**il comprend en outre un affichage ou un moniteur (13) connecté au dit système de commande (7) et accessible aux dits opérateurs (9) pour afficher la scène dans la zone d'entrée (3) après que ledit dispositif de signalisation (13) a signalé l'alarme aux dits opérateurs (9).

5. Système (1) selon la revendication 3 ou 4, **caractérisé en ce qu'**il comprend en outre une interface (10) connectée au dit système de commande (7) et accessible aux dits opérateurs (9) pour désactiver ledit système de signalisation (13) et/ou pour commander au dit actionneur (5) d'ouvrir la porte (4).

6. Système (1) selon la revendication 5, **caractérisé en ce qu'**il comprend en outre un dispositif d'alarme (11) connecté au dit système de commande (7) qui peut être utilisé par les opérateurs (9) au moyen de ladite interface (10) pour signaler une alarme à un garde qui peut intervenir pour la reconnaissance de la personne (6) dans la zone d'entrée (3).

7. Procédé de vidéosurveillance pour commander l'accès à une pièce soumise à une vidéo surveillance, le procédé comprenant les étapes suivantes :
- la capture au moyen d'une caméra vidéo (2) de la scène dans une zone d'entrée (3) dans laquelle il y a une porte automatique (4) pour l'accès aux locaux soumis à la vidéosurveillance, lorsqu'un utilisateur (6) se trouve dans ladite zone d'entrée (3), et
- la reconnaissance d'un visage parmi les images capturées par ladite caméra vidéo (2), le procédé étant **caractérisé en ce que** l'étape de reconnaissance comprend les sous-étapes suivantes :
- la répartition des images capturées par la caméra vidéo (2) dans une pluralité de zones rectangulaires ;
- la classification desdites zones en tant que « VISAGE » et « NON-VISAGE » sur la base d'une base de données d'images contenant des exemples de visages et de non-visages ; et
- l'ouverture de ladite porte (4) si un visage est présent dans les images.

8. Procédé selon la revendication 7, **caractérisé en ce qu'**il comprend en outre l'étape d'avertissement consistant à avertir l'utilisateur (6) de tourner son visage vers la caméra vidéo (2), lorsque son visage n'est pas reconnu après une période de temps prédéfïnie (t1).

9. Procédé selon la revendication 7 ou 8, **caractérisé en ce qu'**il comprend en outre l'étape de signalisation consistant à signaler une alarme aux opérateurs (9) lorsque le visage de l'utilisateur se trouvant dans la zone d'entrée (3) n'est pas reconnu après une période de temps prédéfinie (t2).

10. Procédé selon la revendication 9, **caractérisé en ce que**, après la signalisation de l'alarme aux dits opérateurs (9), la scène dans la zone d'entrée (3) est affichée.

11. Procédé selon la revendication 10, **caractérisé en ce que** lesdits opérateurs (9) désarment l'état d'alarme et/ou commandent l'ouverture de ladite porte (4) si la visualisation de la scène dans la zone d'entrée ne révèle pas de situations à risque.

12. Procédé selon la revendication 10, **caractérisé en ce que** lesdits opérateurs (9) envoient une alarme à un garde si la visualisation de la scène dans la zone d'entrée révèle des situations à risque.
